# EUROPEAN PATENT SPECIFICATION

(11) **EP 0 794 903 B1**
(45) Date of publication and mention of the grant of the patent: **21.03.2001**
(21) Application number: 95943860.7
(22) Date of filing: 12.12.1995
(51) Int. Cl.: B65B 55/02

(54) **SYSTEM AND METHOD FOR STERILE PACKAGING OF BEVERAGES**
SYSTEM UND VERFAHREN ZUM STERILEN VERPACKEN VON GETRÄNKEN
SYSTEME ET PROCEDE DE CONDITIONNEMENT STERILE DE BOISSONS

(30) Priority: 12.12.1994 JP 33142094
(43) Date of publication of application: 17.09.1997
(73) Proprietor: THE COCA-COLA COMPANY, Atlanta, Georgia 30313 (US)
(72) Inventor: KITAHORA, Nobuya, Tokyo 194 (JP); AOYAGI, Osamu, Kanagawa 229 (JP)
(74) Representative: Leale, Robin George
(86) International application number: PCT/US95/16460
(87) International publication number: WO 96/18541

(56) References cited:
- GB-A- 2 263 472
- US-A- 4 208 852
- US-A- 4 590 734

## Description

The present invention relates to a method of sterile packaging of beverages. More specifically, the invention relates to a method of filling sterile beverages in plastics containers while forming the containers in a sterile environment.

At present, plastics containers such as PET bottles are widely used for packaging beverages such as coffee drinks, teas, colas or juices. When a beverage is filled in such a plastics container, the beverage is sterilized by a UHT (ultra high temperature) sterilization treatment or the like, is then filled in the sterilized plastics container, and the container is then sealed with a sterilized cap.

Hitherto, the plastics containers have been produced in a bottle manufacturing plant and the beverages have been filled in the containers in a separate filling plant (bottler) different from the bottle manufacturing plant. As a result, the plastics containers are usually exposed to the open air between the time when they are produced in the bottle manufacturing plant and the time when they reach the filling plant. Thus, it has been necessary to treat the plastics containers by sterilization after their manufacture and prior to filling the beverage in the container.

Known methods for sterilizing plastics containers utilize hydrogen peroxide or an aqueous mixture of hydrogen peroxide. In the case of sterilization with hydrogen peroxide it is necessary to minimize residual amounts of hydrogen peroxide in the plastics containers. This involves technical problems, and long periods of time for washing after sterilization.

US-A-4208852 discloses a method of sterile packaging a beverage in a sterile environment in an enclosure, the method including steps of forming a container, filling the container with sterile beverage, and sealing the container so filled.

According to the present invention there is provided a method of sterile packaging a beverage in a sterile environment in a chamber, the method including the steps of forming a beverage container from a molded preform by blow molding, filling the blow molded container with sterile beverage, and sealing the container so filled with a sterilized cap, and wherein the method further comprises controlling different degrees of sterility in different parts of the said chamber, the degrees of sterility being correlated to the degree required for the method step being performed in the chamber part concerned.

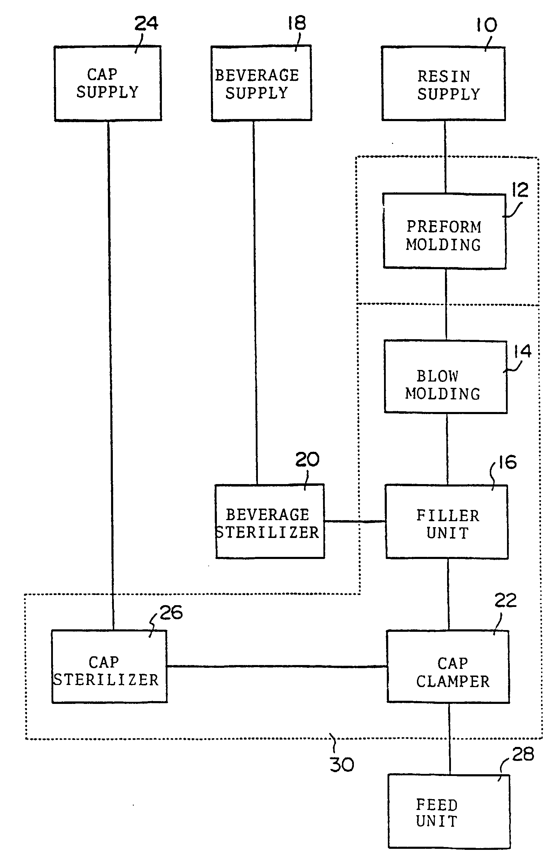

An embodiment of the invention will now be described by way of example and with reference to the accompanying drawings, in which the sole Figure is a block diagram illustrating a method of sterile packaging according to the invention.

In this example, PET (polyethylene terephthalate) is used as the container material. However, other plastics materials such as polyethylene naphthalate, polypropylene, polyethylene, polycarbonate, nylon, etc. can be also used.

In this beverage packaging method, PET material is supplied to a preform molding machine 12 from a resin supply unit 10. The preform molding machine 12 forms a test tube-shaped preform, for example, by injection molding, extrusion molding, etc. When using PET, the temperature at which the preform is molded is in a range of 260°-280°C, for example. Accordingly, the interior of the molded preform is inherently in a state of being heat sterilized.

The molded preform is fed to a blow molding machine 14 and pressurized air is supplied into the preform whereby it is inflated to form a plastics container. When using PET, the temperature of the container immediately after blow molding is in the range of 50°-95°C, for example. When other plastics materials are used, there are some cases where the temperature of the container immediately after blow molding is somewhat higher than the above temperature range.

In this example the preform molding machine 12 and the blow molding machine 14 are constructed as distinct units but are directly connected together. Alternatively the preform molding machine 12 and the blow molding machine 14 may be located separately and a preform molded by the machine 12 may then be transported to the machine 14 by any known means.

Preferably the preform molding machine 12 and the blow molding machine 14 are constructed as distinct units but directly connected together, as mentioned above. Even more preferably, these units are constructed as an integral molding machine, such as an injection blow molding machine or an extrusion blow molding machine. Then, when using an injection blow molding machine, the preform molding is carried out using a neck mold, a core mold and a cavity mold, and the blow molding is carried out using the neck mold and the blow mold employed in the preform molding.

PET bottles molded as above are supplied to a filler unit 16. Beverages such as coffee drinks, teas, colas or juices are supplied to a beverage sterilizer unit 20 from a beverage supply unit 18. The beverages are subjected to a UHT sterilization treatment, for example. The beverages are filled in the PET bottles molded as above and the filled bottles are passed to a cap clamping unit 22.

Caps, made conventionally from metal sheet, plastics or the like, are supplied to a cap sterilizer 26 from a cap supply unit 24. The caps are then sterilized before being supplied to the cap clamping unit 22. In the unit 22 the sterilized caps are clamped on the PET bottles filled with beverage.

The capped and sealed bottles are then passed to a feed unit 28. In this unit the bottles are labelled and placed in cases, for example. After being subjected to any necessary treatment like sampling inspection, the bottles are then transported to consumers.

According to the present embodiment, the blow molding machine 14, the filler unit 16, the cap sterilizer unit 26 and the cap clamping unit 22 are arranged within a sterile chamber 30.

When the temperature of the containers at the time of blow molding carried out in the blow molding machine 14 is relatively high, the inside of the container is thereby inherently heat sterilized. This enables one to fill beverages in containers coming from the molding machine 14, without any further sterilization.

On the other hand, if the temperature at the time of blow molding in the machine 14 is relatively low, or in the case of beverages which require an especially high degree of sterilization, a container sterilizer unit and a washing unit or the like may be installed between the blow molding machine 14 and the filler unit 16. In this case however, as the interior of the plastics containers is nevertheless at a relatively high temperature when coming from the blow molding machine 14, the degree of sterilization can be reduced as compared with a conventional process in which container molding and beverage filling are carried out at separate locations. Accordingly, it is possible to significantly reduce the amount of sterilizing agent used, thereby reducing costs. Moreover, since the degree of sterilization can be reduced in this way, the space occupied by the filler unit can also be reduced.

Further, the temperature of a container immediately after its molding by means of the blow molding machine 14 is in a range of 50°-95°C, for example. Then if a container sterilizer unit is provided adjacent the blow molding machine, a container supplied to the sterilizer unit immediately after being blow molded will be at such a temperature. Normally, when a container is sterilized with an agent such as hydrogen peroxide, the container is heated to a high temperature in order to enhance the sterilization effect. However, as the container is already heated when it comes from the blow molding machine 14, such additional heating is now unnecessary.

In a preferred embodiment of the present invention, the preform molding machine 12, the blow molding machine 14, the filler unit 16, the cap steriliser unit 26 and the cap clamping unit 22 are all located within the sterile chamber 30.

As mentioned above, plastics material is treated at fairly high temperatures in the preform molding machine 12 to form a preform. Accordingly, the preform is heat sterilized. Then, even after passing through the blow molding machine 14, the interior of the formed container is still in a sterilized state. Accordingly, beverages can be filled by the filler unit 16 without it being necessary to further sterilize containers supplied from the blow molding machine 14.

Depending on temperature conditions and necessary sterilization conditions, a sterilizer unit, a washing unit, etc. may be provided between the blow molding machine 14 and the filler unit 16, for example. However, as the preform molding machine 12, the blow molding machine 14, the filler unit 16, etc. are arranged within the sterile chamber 30, the sterilization treatment may be substantially reduced.

The sterile chamber 30 is provided with different parts having different degrees of sterility, depending on the process being carried out in the chamber part concerned. For example, the preform molding machine 12 and/or the blow molding machine 14, etc. can be located in a part of the chamber (a so-called clean room) having a relatively low grade of sterility, while other units can be located in a chamber part having a high grade of sterility.

## Claims

1. A method of sterile packaging a beverage in a sterile environment in a chamber, the method including the steps of forming a beverage container from a molded preform by blow molding, filling the blow molded container with sterile beverage, and sealing the container so filled with a sterilized cap characterised in that the method further comprises controlling different degrees of sterility in different parts of the said chamber, the degrees of sterility being correlated to the degree required for the method step being performed in the chamber part concerned.

2. A method as claimed in claim 1, wherein the step of blow molding heats the container to a sufficient temperature to sterilize the interior of the container.

3. A method as claimed in claim 1 or 2, including the step of molding the said preform by injection molding in the sterile environment.

4. A method as claimed in any of claims 1 to 3, further comprising the steps of sterilizing the said caps in the sterile environment.

## Patentansprüche

1. Verfahren zum sterilen Verpacken eines Getränks in einer sterilen Umgebung in einer Kammer, wobei das Verfahren die Schritte umfasst: Bilden eines Getränkebehälters aus einer geformten Vorform durch Blasformgebung, Füllen des blasgeformten Behälters mit sterilem Getränk, und Verschließen des so gefüllten Behälters mit einer sterilisierten Verschlusskappe, dadurch gekennzeichnet, dass das Verfahren weiter umfasst: Steuern von unterschiedlichen Sterilisationsgraden in verschiedenen Teilen der Kammer, wobei die Sterilisationsgrade mit dem Grad korreliert sind, der für den Verfahrensschritt erforderlich ist, der in dem betreffenden Kammerteil durchgeführt wird.

2. Verfahren nach Anspruch 1, bei dem der Blasformgebungsschritt den Behälter auf eine Temperatur erhitzt, die ausreicht, um das Innere des Behälters zu sterilisieren.

3. Verfahren nach Anspruch 1 oder 2, umfassend den Schritt einer Formgebung der Vorform durch Spritzgießen in der sterilen Umgebung.

4. Verfahren nach einem der Ansprüche 1 bis 3, weiter umfassend die Schritte eines Sterilisierens der Verschlusskappen in der sterilen Umgebung.

## Revendications

1. Procédé de conditionnement stérile d'une boisson dans un environnement stérile dans une chambre, le procédé incluant les étapes consistant à former un conteneur pour boisson à partir d'une préforme moulée à l'aide d'un moulage par soufflage, à remplir le conteneur moulé par soufflage avec une boisson stérile, et à sceller le conteneur ainsi rempli avec un bouchon stérilisé, caractérisé en ce que le procédé comprend de plus la maîtrise des différents degrés de stérilité dans les différentes parties de ladite chambre, les degrés de stérilité étant en corrélation avec le degré requis pour l'étape de procédé à effectuer dans la partie de chambre concernée.

2. Procédé selon la revendication 1, dans lequel l'étape de moulage par soufflage chauffe le conteneur à une température suffisante pour stériliser l'intérieur du conteneur.

3. Procédé selon la revendication 1 ou 2, incluant l'étape consistant à mouler ladite préforme à l'aide d'un moulage par injection dans l'environnement stérile.

4. Procédé selon l'une quelconque des revendications 1 à 3, comprenant de plus les étapes consistant à stériliser lesdits bouchons dans ledit environnement stérile.
